# EUROPEAN PATENT APPLICATION

(11) **EP 1 744 478 A2**
(43) Date of publication of application: **17.01.2007**
(21) Application number: 06253617.2
(22) Date of filing: 11.07.2006
(51) Int. Cl.: H04H 9/00, H04N 7/173

(54) **Method for transmission of digital data from a broadcast data receiver**

(30) Priority: 13.07.2005 GB 0514339
(71) Applicant: Pace Micro Technology PLC, Saltaire, Shipley, BD18 3LF (GB)
(72) Inventor: Fulcher, Richard, Saltaire Shipley, BD18 3LF (GB)
(74) Representative: Wood, Graham

(57) **Abstract**

The invention relates to a method of allowing the transmission of data along a return transmission path from one or more broadcast data receivers to a remote location, typically a broadcast location. The digital data is transmitted in a differential QPSK form thereby allowing external memory means to be not required and the data to be stored in the memory of an integrated circuit transmitter, thereby providing cost savings in the manufacture of the broadcast data receiver.

## Description

The invention to which this application relates is an improvement in a method and apparatus for the transmission of data in accordance with international standards and to achieve the same in a manner which allows the reduction in components required to be used and, as a result, a reduction in the expense of the apparatus in which the components are included.

In digital television broadcast systems the data from which the video and audio is to be generated is broadcast from one or more transmission locations to a plurality of broadcast data receivers at various locations and premises. However from time to time there is a need for data to be transmitted from the broadcast data receiver in a reverse or return direction. This can be for the need to send technical information, purchase information, for example if a person has purchased a film or other service, or other information.

In the transmission of data from broadcast data receivers, an international standard which is required to be complied with is known as DVS178. The transmission of data from the receiver to the transmit location, or another designated remote location, is known as a return path transmission. The broadcast data receiver, in normal operating mode receives data which is broadcast to that, and a plurality of receivers, at various locations, and the receiver processes the data into video, audio or auxiliary data which is then displayed via display screens and/or speakers in the form, for example of a series of television channels. From time to time there is a need for broadcast data receivers to transmit signals in a return direction and to do so in a manner in accordance with the standard DVS178.

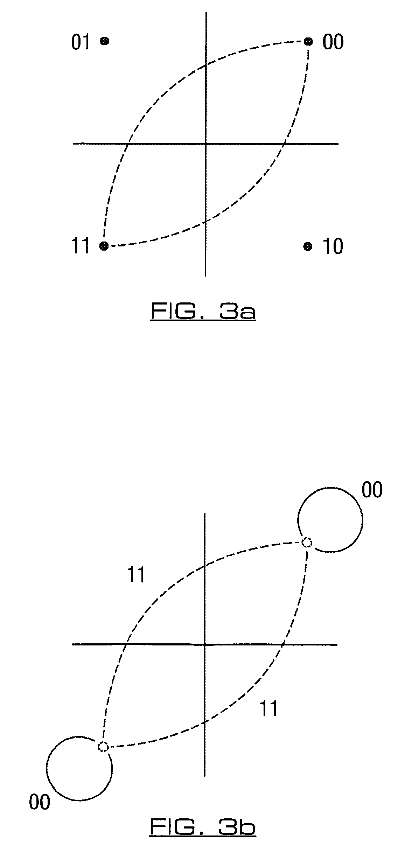

The manner of transmission in accordance with the standard requires that there is a first portion of data called the preamble followed by the actual data which is required to be sent. The preamble is transmitted in a modulated QPSK mode to have the form C,C,C,C,C,C,O whereas the remaining data is transmitted in a differential QPSK mode. QPSK is a system which is used to allow the received data to be mapped in a constellation at the receipt of the data so as to allow the subsequently received data to be understood and processed. The QPSK form as shown in Figure 3a allows specific locations and points to be identified with values 00, 01, 10, 11 while the differential QPSK form as shown in Figure 3b allows the transition between the points to be given the values 00, 11, 10, 01.

A problem with the procedure which is conventionally used is that a number of components are required to achieve the transmission, namely a QPSK transmitter integrated circuit (chip) and a SDRAM memory connected thereto. These components are expensive to the manufacturer and therefore the aim of the invention is to provide a method which allows the return transmission of data in accordance with the accepted standards in a more efficient and economic manner.

In a first aspect of the invention there is provided a method for the transmission of digital data from a broadcast data receiver to a remote location the transmission means at the broadcast data receiver comprising a data processing means and a transmission integrated circuit having a memory therein, the memory arranged to store the data prior to transmission, wherein the data includes a preamble data portion and a remainder data portion and the transmission means is arranged to process, store and transmit the data in a differential QPSK mode.

In one embodiment the data is transmitted such that it is received in a form compatible with the standard DVS178.

Typically the data is held in a memory section within the integrated circuit chip which is conventionally used for storing only the preamble data for the transmission such that said memory section is now used to store the preamble data and the additional data for transmission, with all of the said data in the differential QPSK format.

In one embodiment the method includes the steps of storing data for a preamble portion of the transmission in memory, storing data for the remainder of the transmission in memory and wherein said memory is a common memory section of a QPSK transmission integrated circuit chip.

In one embodiment both the preamble and further data of the transmission are transmitted in differential QPSK mode.

In one embodiment the preamble data is transmitted in the format F,F,F,F,F,F,0 different QPSK form so as to have the same appearance as the conventional QPSK C,C,C,C,C,C,0 form required to be in accordance with DVS 178.

In one embodiment the transmission data passes through one or both of a Reed Solomon error correction process and/or a randomisation procedure. Typically these procedures are incorporated in and controlled by software and occur prior to the data entering the memory in the transmitter integrated circuit chip. Typically the data generated by the error correction process is also stored in the memory of the integrated circuit chip along with the rest of the data to be transmitted.

In one embodiment, in order to stop the transmission of the data, a message is generated indicating that a false byte of data is required to be transmitted. As the integrated circuit chip does not know that the data held in its memory is preamble data and further data the false byte of data is generated which is detected and causes the transmission to stop. In order to prevent the false byte of data actually being transmitted as this has no practical use, the amplifier used to transmit the data from the integrated circuit chip is timed to switch off prior to the said false data byte being transmitted at the end and so this false byte of data is not actually transmitted to the remote location.

In one embodiment the QPSK transmission integrated circuit chip which is used is that sold by Broadcom under the name 3250 and the preamble and remaining transmission data is held in a memory section with a memory size of 128 bytes.

As the preamble and further data is all held in the memory of the integrated circuit chip there is no longer the need for the SDRAM memory device to be provided to allow the transmission to be achieved. This therefore means that in at least some broadcast data receivers of this type the SDRAM component can be completely removed especially when it is not required for any other function on the broadcast data receiver and this represents a significant cost saving.

Specific embodiment of the invention will now be described with reference to the accompanying drawings wherein;
Figure 1a and b illustrates a schematic diagram of a conventional return path transmission system and the data form;
Figures 2a and b illustrates a schematic diagram of a return path transmission system in accordance with the invention and the data form; and
Figure 3 illustrates the QPSK and differential QPSK formats.

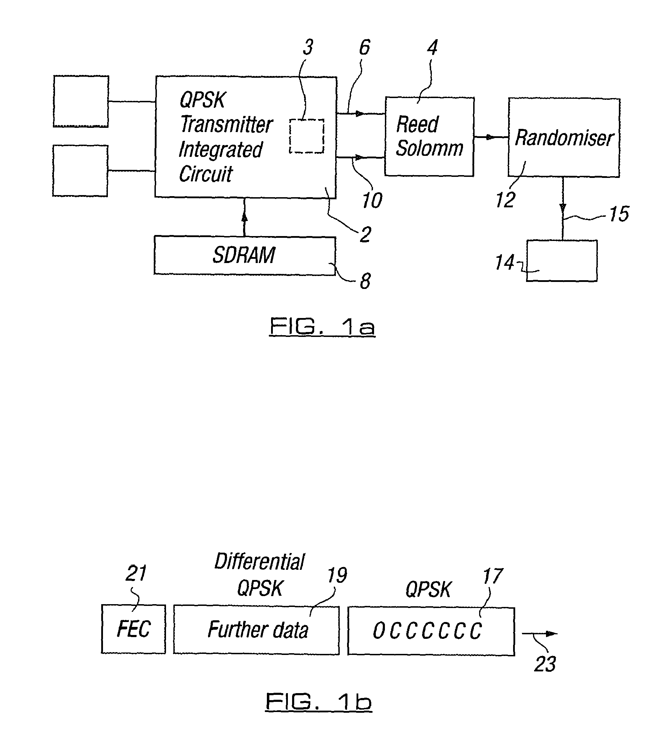

Referring firstly to Figure 1 there is illustrated a conventional return data transmission means which is provided within a broadcast data receiver (not shown). Broadcast data receivers are items of electrical apparatus which are provided to receive digital data broadcast from a remote location, and process the same to allow radio and/or television programmes to be generated. From time to time there is a need to transmit data in the reverse or return direction normally to allow information to be provided to a broadcast provider. When data is required to be transmitted in the return path, then, in accordance with the International standard DVS178, within the broadcast data receiver, a preamble section 3 of data is retrieved from a memory section within a QPSK transmitter integrated circuit (chip) 2. This data is sent from the circuit 2 in a QPSK mode towards a Reed Solomon error corrector 4 along path 6. At the same time, the further data which is to be transmitted and which follows the preamble data is called up from its storage location in SDRAM memory component 8. This data passes into the chip 2 and is processed into a differential QPSK mode and is emitted along path 10 and follows the preamble data 6 into the Reed Solomon component 4. From there the data passes into the randomiser component 12 and is transmitted via an amplifier 15 onto the subsequent destination 14 such as the broadcast service provider, along a data transmission path. The format of the conventional data stream is shown in Figure 1 as comprising the preamble data 17 in QPSK form and the further data 19 and forward error correction data 21 in differential QPSK mode as it is transmitted 23.

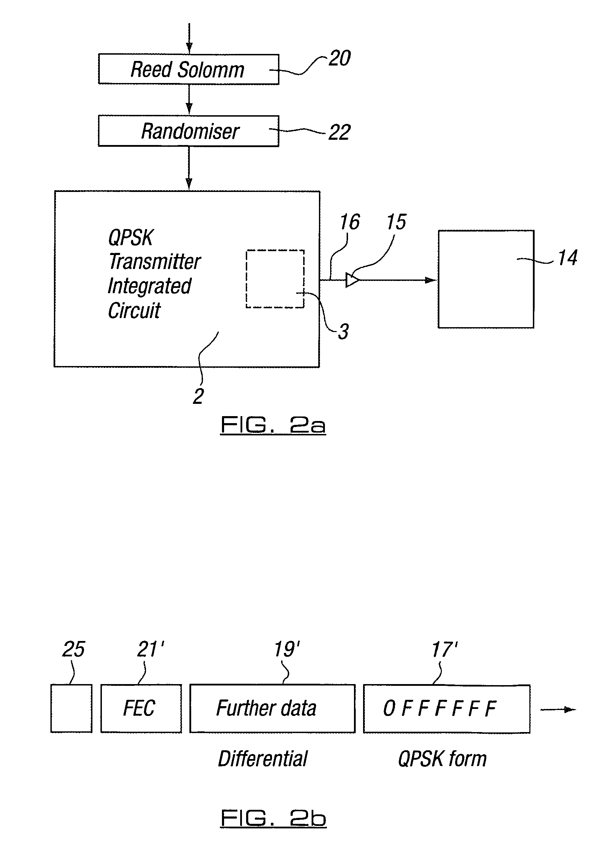

It has been recognised that the use of the SDRAM component 8 is financially unattractive and therefore the current invention as described in Figure 2 provides a solution to this problem.

In this case there is no SDRAM component and all of the data which is to be transmitted is held and stored in memory 3 in the chip 2. In fact all of the data is held in that section of memory which is allocated conventionally for only the preamble data. This memory section size, typically 128 bytes, is of a sufficient size to accommodate all of the data.

As the data, other than the preamble data, is required by the standard DVS 178 to be transmitted in differential QPSK mode then all of the data transmitted from this memory section in direction 16 has to be able to be output in differential QPSK mode. In order to allow the preamble data to be recognisable, the preamble data is output in the form F,F,F,F,F,F,0 as it is found that when processed this has the same " appearance" and hence effect as the conventional form of preamble data output in QPSK mode in the form C,C,C,C,C,C,O. Figure 2b illustrates the data format in accordance with the invention in which the preamble portion 17', further data portion 19' and 21' are all in differential QPSK mode. Also shown is how the false byte of data 25 is attached to the end of the required data stream. In practise the false byte is not transmitted as the amplifier 15 is switched off as the false byte is detected by the integrated circuit chip 2 before it reaches the amplifier and the chip closes the amplifier and hence stops the data transmission.

Thus in accordance with the invention all of the data to be transmitted is held in memory 3 in the chip 2, and is all transmitted in differential QPSK mode.

Also, in accordance with the invention, the Reed Solomon and randomiser steps 20, 22 are performed using software and are performed on the data prior to the same entering the memory 3 in the integrated circuit chip 2 rather than afterwards as is conventionally the case. From the chip, when required the data can then be transmitted to be received at location 14, with the error correction and randomisation already having been performed.

As a result of the invention, the data, when received, is provided in a format which has the same effect as if it had been sent in the conventional method and therefore allows the standard DVS 178 to be complied with but also allows at least one component of the conventional apparatus to be removed when that SDRAM memory was only required for the storage of data to be transmitted along the return path.

## Claims

1. A method for the transmission of digital data from a broadcast data receiver to a remote location, the transmission means at the broadcast data receiver comprising a data processing means and a transmission integrated circuit having a memory therein, the memory arranged to store the data prior to transmission wherein the data includes a preamble data portion and a remainder data portion and the transmission means is arranged to process, store and transmit the said data in a differential QPSK mode.

2. A method according to claim 1, wherein the transmission means includes an amplifier which allows data to be transmitted to a remote location.

3. A method according to claim 1 wherein the transmission means is arranged to transmit the data without the requirement for an associated SDRAM memory.

4. A method according to claim 1, wherein the processing means performs a randomisation step on the remainder data portion prior to entering the data into the memory in the integrated circuit.

5. A method according to claim 4 wherein the randomisation is controlled by software.

6. Transmission means according to claim 1, wherein the processing means performs error correction of the remainder data portion prior to entering the data into the memory in the integrated circuit.

7. A method according to claim 6, wherein the error correction comprises Reed Solomon error correction.

8. A method according to claim 6 wherein the randomisation is controlled by software.

9. A method according to claim 1, wherein the processing means generates a false portion of data so as to cause the end of transmission of the data.

10. A method according to claim 9, wherein an amplifier connected to allow transmission of the data is switched off to prevent the transmission of the false data portion.

11. A method according to claim 1 wherein the transmission means is arranged to transmit the data signal in accordance with the DVS178 standard.

12. A method according to claim 1 wherein the data is transmitted via a data connection to a broadcaster location, said connection also used to transmit video and/or audio data from the broadcaster location to one or more of the broadcast data receiver.

13. A method according to claim 1 wherein the preamble portion of data is converted from a CCCCCCO format to an FFFFFFO format for storage in said memory and subsequent transmission.

14. A method according to claim 1 wherein the method is performed within each of a plurality of broadcast data receivers when an instruction is received from the user of the apparatus and/or a broadcaster to transmit information from said broadcast data receivers.
